# EUROPÄISCHE PATENTSCHRIFT

(11) **EP 0 840 688 B1**
(45) Veröffentlichungstag und Bekanntmachung des Hinweises auf die Patenterteilung: **06.10.1999**
(21) Anmeldenummer: 97925833.2
(22) Anmeldetag: 30.04.1997
(51) Int. Cl.: B61H 7/08

(54) **MAGNETISCHE BREMSE, INSBESONDERE LINEARE WIRBELSTROMBREMSE**
MAGNETIC BRAKE, IN PARTICULAR LINEAR EDDY CURRENT BRAKE
FREIN MAGNETIQUE, EN PARTICULIER FREIN LINEAIRE A COURANTS DE FOUCAULT

(30) Priorität: 10.05.1996 DE 19618903
(43) Veröffentlichungstag der Anmeldung: 13.05.1998
(73) Patentinhaber: KNORR-BREMSE Systeme für Schienenfahrzeuge GmbH, 80809 München (DE)
(72) Erfinder: SAUMWEBER, Eckart, D-82131 Gauting (DE); GRAUTSTÜCK, Heinrich, D-80993 München (DE); KRÖGER, Uwe, D-80993 München (DE)
(86) Internationale Anmeldenummer: DE9700908
(87) Internationale Veröffentlichungsnummer: WO9743161

(56) Entgegenhaltungen:
- FR-A- 2 098 116
- FR-A- 2 345 845

## Beschreibung

Die Erfindung betrifft eine magnetische Bremse, insbesondere eine lineare Wirbelstrombremse für Schienenfahrzeuge, nach dem Oberbegriff des Anspruches 1.

Den Wirbelstrombremsen wird insbesondere im Rahmen der Weiterentwicklung von Hochgeschwindigkeitszügen eine erhöhte Aufmerksamkeit zugewandt, denn da sie die Schiene beim Bremsen nicht berühren, sind sie verschleißfrei und damit in der Wartung kostengünstig. Eine kurze Einführung in die Technologie der Wirbelstrombremsen für Schienenfahrzeuge - deren Funktion auf dem Induktionsgesetz basiert - findet sich beispielsweise in dem Buch von Saumweber et al "AET - Archiv für Eisenbahntechnik, Hestra-Verlag, Bd.43, Kap.2.5.2". Wirbelstrombremsen bestehen danach aus einem Eisenjoch mit mehreren Polkernen. Elektrische Spulen erregen die Bremse magnetisch derart, daß alternierend magnetische Nord- und Südpole entstehen. Bei Bewegung der erregten Wirbelstrombremse über die Schiene - d.h. bei einer Bremsung - entstehen durch Wirbelströme hervorgerufene Magnetfelder, aus welchen die Bremskraft resultiert.

Die Erfindung zielt darauf ab, den konstruktiven Aufbau von Wirbelstrombremsen zu verbessern.

Die Erfindung erreicht dieses Ziel durch den Gegenstand des Anspruches 1.

Die Erfindung schafft eine magnetische Bremse, insbesondere eine lineare Wirbelstrombremse für Schienenfahrzeuge, mit einem sich nahezu über die gesamte Lange der Wirbelstrombremse erstreckenden Magnetjoch, die in der Einbaustellung wenigstens zur Schiene hin eine konkave Außenform aufweist.

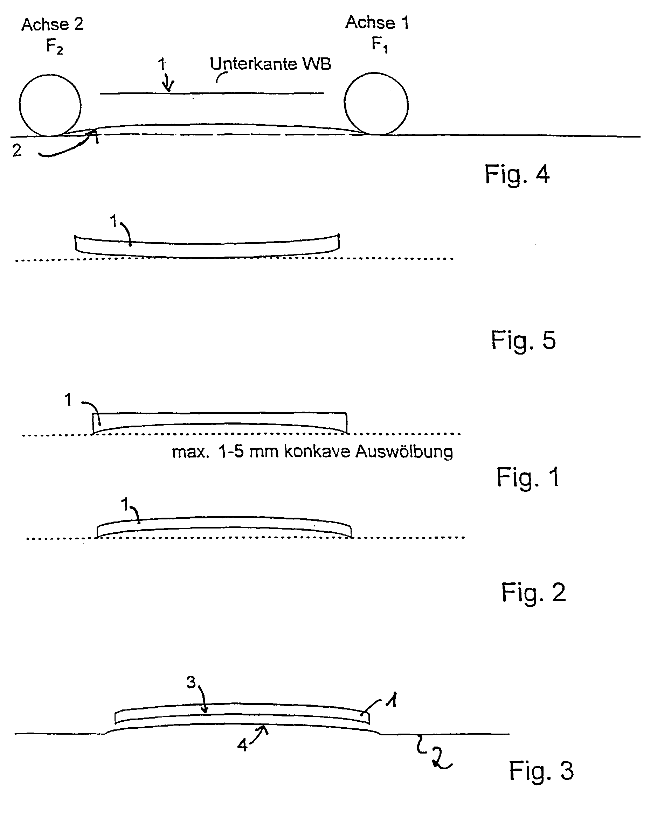

Die Erfindung beruht auf der Erkenntnis, daß die während des Betriebs einer Wirbelstrombremse erzeugten Anzugskräfte zu einer elastischen Durchbiegung der Bremse führen können (siehe Fig. 4). Desweiteren kann sich das Gleis durch die Aufstandskräfte der Achsen durchbiegen (siehe Fig. 5; z.B. im Weichenbereich). Außerdem wird das Gleis durch die Anziehungskraft der Magnete im Bereich der Weichen u.U. etwas angehoben.

Die vorstehend beschriebenen Effekte führen dazu, daß der Luftspalt zwischen Schiene und Bremse über die Gesamtlänge der Bremse nicht konstant ist; bei der Einstellung des Luftspaltes muß der minimale Wert in der Mitte der Bremse berücksichtigt werden.

Die Erfindung hilft diesem Effekt dadurch ab, daß aus der in der Längsrichtung gesehen konkaven Formgebung ein Ausgleich der Durchbiegung im Sinne eines zumindest weitgehend gleichmäßigen, linearen Verlaufs des Luftspaltes resultiert.

Vorteilhafte Ausgestaltungen der Erfindung sind den Unteransprüchen zu entnehmen.

Nachfolgend wird die Erfindung unter Bezug auf die Zeichnung näher beschrieben, wobei auch weitere Vorteile der Erfindung deutlich werden. Es zeigt:
Fig. 1 eine schematische Darstellung einer ersten Ausführungsform der Erfindung;
Fig. 2 eine schematische Darstellung einer zweiten Ausführungsform der Erfindung;
Fig. 3 eine schematische Darstellung der Wirkungsweise der Erfindung;
Fig. 4 und 5 den Effekt des Durchbiegens von Schiene und Bremse nach dem Stand der Technik.

Zunächst sei Fig. 1 beschrieben. Fig. 1 zeigt eine schematische Darstellung einer Wirbelstrombremse 1, die an ihrer zur Schiene 2 zeigenden Unterseite konkav ausgeformt ist (z.B. Ausfräsung des Magnetjochs von 0 mm am Rand bis zu 1 - 5 mm in der Mitte der Bremse). In Fig. 2 ist eine Variante dieser Idee dargestellt, bei der die Bremse plastisch so vorgeformt ist, daß sich zur Schiene 2 hin eine konkave Verformung ergibt. Durch die Erfindung wird der Effekt des Durchbiegens der Bremse beim Betrieb unkompliziert ausgeglichen, denn wenn die Bremse im Betrieb um ca. 5 mm durchgebogen wird, ist sie bei einer entsprechenden Vorformung im Betrieb quasi eben.

Bevorzugt verläuft die konkave Form stetig; alternativ sind aber auch gestufte Ausbildungen realisierbar, z.B. dadurch, daß Spulen mit einer unterschiedlichen Höhe eingesetzt werden.

Bei der Erfindung hat es sich ferner als vorteilhaft erwiesen, die Spulen als mit Gießharz vakuumvergossene Einzelspulen auszulegen. Vorzugsweise sind ferner ein verschweißter Schutzkasten mit einer Wandstärke von 0,5 bis 1,5 mm und eine Isolationsstärke zwischen den Spulen und dem Schutzkasten von 1 +/-0,5 mm vorgesehen. Der Polkern ragt an seiner Unterseite um 2 bis 15 mm aus dem Schutzkasten heraus und übernimmt damit auch die Funktion einer Polplatte Schließlich hat es sich als vorteilhaft erwiesen, Polkern und Schutzkasten an ihren Oberseiten bündig zu verschweißen, so daß Joch und Polkern unter maximaler Ausnutzung des Wickelraumes für die Spule bündig anliegen. Ebenfalls vorteilhaft ist eine Polteilung mit τ = 170 mm +/-10 mm.

Fig. 3 veranschaulicht, daß sich durch die konkave Form (insbesondere im Weichenbereich) ein konstanter Luftspalt zwischen Schienenoberkante 3 und Bremsenunterkante 4 ergibt. Hier ist die Bremse so weit konkav vorgeformt, daß sie sich im Betrieb der Aufbiegung der Schiene anpaßt. Dabei werden natürlich nicht z.B. durch Drehgestelle hervorgerufene Durchbiegungen von Schienen verhindert, es ergibt sich aber durch die konkave Vorformung eine dem Idealbild eines konstanten Spaltverlaufes nahekommende Wirbelstrombremse.

## Patentansprüche

1. Magnetische Bremse, insbesondere lineare Wirbelstrombremse (1) für Schienenfahrzeuge, vorzugsweise mit einem sich nahezu über die gesamte Länge der Wiirbelstrombremse erstreckenden Magnetjoch, gekennzeichnet durch eine in der Einbaustellung und in der Längsrichtung wenigstens zur Schiene (2) hin konkave Außenform.

2. Lineare Wirbelstrombremse nach Anspruch 1, dadurch gekennzeichnet, daß die konkave Form stetig verläuft.

3. Lineare Wirbelstrombremse nach Anspruch 1 oder 2, dadurch gekennzeichnet, daß die konkave Form gestuft ist.

4. Lineare Wirbelstrombremse nach einem der vorstehenden Ansprüche, dadurch gekennzeichnet, daß die konkave Form durch eine entsprechende Ausfräsung oder auch durch eine plastische Verformung des Magnetjochs gebildet wird und daß die konkave Form gegenüber einer Ebene in der Mitte der Bremse eine Tiefe von 1 bis 5 mm aufweist.

5. Lineare Wirbelstrombremse nach einem der vorstehenden Ansprüche, dadurch gekennzeichnet, daß die konkave Form durch Spulen unterschiedliche Höhe gebildet wird.

6. Lineare Wirbelstrombremse nach einem der vorstehenden Ansprüche, dadurch gekennzeichnet, daß die Spulen als mit Gießharz vakuumvergossene Einzelspulen ausgeführt sind.

7. Lineare Wirbelstrombremse nach einem der vorstehenden Ansprüche, gekennzeichnet durch einen verschweißten Schutzkasten mit einer Wandstärke von 0,5 bis 1,5 mm.

8. Lineare Wirbelstrombremse nach einem der vorstehenden Ansprüche, gekennzeichnet durch eine Isolationsstärke zwischen Spulen und Schutzkasten von 1 +/-0,5 mm.

9. Lineare Wirbelstrombremse nach einem der vorstehenden Ansprüche, gekennzeichnet durch einen Polkern, der an seiner Unterseite um 2 bis 15 mm aus dem Schutzkasten herausragt und damit auch die Funktion einer Polplatte ausübt.

10. Lineare Wirbelstrombremse nach einem der vorstehenden Ansprüche, dadurch gekennzeichnet, daß der Polkern und der Schutzkasten an ihren Oberseiten bündig verschweißt sind, so daß Joch und Polkern unter maximaler Ausnutzung des Wickelraumes für die Spule bündig anliegen.

## Claims

1. Magnetic brake, in particular linear eddy current brake (1) for rail vehicles, preferably comprising a magnet yoke extending almost over the entire length of the eddy current brake, characterised by an external shape which is concave in the fitting position and along the longitudinal extension at least towards the rail (2).

2. Linear eddy current brake according to Claim 1, characterised in that said concave shape progresses continuously.

3. Linear eddy current brake according to Claim 1 or 2, characterised in that said concave shape is stepped.

4. Linear eddy current brake according to any of the preceding Claims, characterised in that said concave shape is formed by an appropriate countersinking operation or even by a plastic deformation of the magnet yoke, and that said concave shape has a depth of 1 to 5 mm relative to a plane in the centre of the brake.

5. Linear eddy current brake according to any of the preceding Claims, characterised in that the coils are designed as individual coils vacuum-cast with a casting resin.

6. Linear eddy current brake according to any of the preceding Claims, characterised in that the coils are designed as individual coils vacuum-cast with a casting resin.

7. Linear eddy current brake according to any of the preceding Claims, characterised by a welded protector box having a wall thickness of 0.5 to 1.5 mm.

8. Linear eddy current brake according to any of the preceding Claims, characterised by an isolation gap between said coils and said protector box of 1 +/-0.5 mm.

9. Linear eddy current brake according to any of the preceding Claims, characterised by a pole core projecting, on its underside, beyond said protector box by 2 to 15 mm, thus also performing the function of a pole flange.

10. Linear eddy current brake according to any of the preceding Claims, characterised in that said pole core and said protector box are welded flush on their upper sides such that said yoke and said pole core will fit flush with maximum exploitation of the winding space for said coil.

## Revendications

1. Frein magnétique, notamment frein linéaire à courants de Foucault (1) pour véhicules sur rails, de préférence comportant une culasse magnétique qui s'étend pratiquement sur toute la longueur du frein à courants de Foucault, caractérisé par une forme extérieure concave au moins du côté du rail (2), dans la position de montage et dans la direction longitudinale.

2. Frein linéaire à courants de Foucault selon la revendication 1, caractérisé en ce que la forme concave est continue.

3. Frein linéaire à courants de Foucault selon la revendication 1 ou 2, caractérisé en ce que la forme concave est étagée.

4. Frein linéaire à courants de Foucault selon l'une des revendications précédentes, caractérisé en ce que la forme concave est établie par un fraisage correspondant ou également par une déformation plastique de la culasse magnétique et en ce que la forme concave possède une profondeur de 1 à 5 mm par rapport à un plan, au milieu du frein.

5. Frein linéaire à courants de Foucault selon l'une des revendications précédentes, caractérisé en ce que la forme concave est établie au moyen de bobines de différentes hauteurs.

6. Frein linéaire à courants de Foucault selon l'une des revendications précédentes, caractérisé en ce que les bobines sont réalisées sous la forme de bobines individuelles enrobées sous vide d'une résine de coulée.

7. Frein linéaire à courants de Foucault selon l'une des revendications précédentes, caractérisé par une boîte de protection soudée possédant une épaisseur de paroi de 0,5 à 1,5 mm.

8. Frein linéaire à courants de Foucault selon l'une des revendications précédentes, caractérisé par une épaisseur d'isolation de 1 +/- 0,5 mm entre les bobines et la boîte de protection.

9. Frein linéaire à courants de Foucault selon l'une des revendications précédentes, caractérisé par un noyau polaire qui, au niveau de sa face inférieure, fait saillie sur 2 à 15 mm hors de la boîte de protection et par conséquent assume également la fonction d'une plaque polaire.

10. Frein linéaire à courants de Foucault selon l'une des revendications précédentes, caractérisé en ce que le noyau polaire et la boîte de protection sont soudés de niveau à leurs faces supérieures, de sorte que la culasse et le noyau polaire s'appliquent de niveau avec une utilisation maximale de l'espace d'enroulement pour la bobine.
